# FASCICULE DE BREVET EUROPEEN

(11) **EP 1 422 879 B1**
(45) Date de publication et mention de la délivrance du brevet: **12.03.2008**
(21) Numéro de dépôt: 03292875.6
(22) Date de dépôt: 19.11.2003
(51) Int. Cl.: H04L 12/413, H04L 29/06, B60R 16/02

(54) **Système de transmission sécurisée d'informations entre des stations raccordées par un réseau de transmission d'informations embarqué à bord d'un véhicule automobile.**
System für sichere Informationsübertragung zwischen den mit dem Informationsübertragungsnetz verbundenen Stationen am Bord eines Kraftwagens.
System for secure information transmission between stations connected through information transmission network on board of an automotive vehicle.

(30) Priorité: 22.11.2002 FR 0214694
(43) Date de publication de la demande: 26.05.2004
(73) Titulaire: Peugeot Citroën Automobiles S.A., 78140 Vélizy Villacoublay (FR)
(72) Inventeur: Marais, Jean-Michel, 92000 Nanterre (FR)
(74) Mandataire: Habasque, Etienne J. Jean-François

(56) Documents cités:
- WO-A-01/20854
- DE-A- 4 012 544
- US-A- 5 448 561
- US-A- 5 469 150
- US-A1- 2002 034 180

## Description

La présente invention concerne un système de transmission sécurisée d'informations entre des stations raccordées par un réseau de transmission d'informations embarqué à bord d'un véhicule automobile.

Dans ce type de systèmes, les stations sont adaptées pour échanger des informations à travers le réseau sous la forme de trames de communication et au moins l'une des stations est une station maître adaptée pour émettre des trames d'informations de commande à destination d'au moins une station esclave.

Un tel système est décrit dans le document US 5 448 561 A.

Ceci est par exemple le cas dans les applications électroniques automobiles réparties basées sur des réseaux non déterministes de type CAN ou VAN, etc., pour lesquelles la commande d'un organe fonctionnel du véhicule, comme par exemple la commande en position d'un moteur pas à pas, la commande en couple d'un moteur électrique, l'allumage de voyants, etc., est calculée par une station qui est appelée station maître ou émettrice mais est appliquée par une autre ou plusieurs autres stations également appelées stations esclaves ou réceptrices.

Malgré le fait que les différents protocoles de transmission mis en oeuvre dans ces réseaux de transmission d'informations, présentent de nombreuses sécurités (CRC, bourrage de bits, etc.), certains phénomènes de défaillance peuvent arriver alors que tout semble normal du côté de la transmission réseau.

Ainsi par exemple, il peut se poser des problèmes au niveau des composants de mémoire de la station, alloués à la couche réseau et qui bloquent tout rafraîchissement des commandes émises sur ce réseau. Ce phénomène peut arriver aussi bien à la station émettrice qu'aux stations réceptrices.

Le processus applicatif peut également être en défaillance alors que le processus d'émission et de réception des trames de communication continue à fonctionner correctement ce qui se traduit par le fait que les informations émises ne sont pas rafraîchies.

Par ailleurs, ces protocoles ne permettent pas non plus aux stations émettrices d'une information de commande de savoir que celle-ci a bien été reçue et prise en compte par les stations réceptrices, ce qui présente des inconvénients dans le cas de contrôle/commande à distance.

Le but de l'invention est donc de résoudre ces problèmes.

A cet effet, l'invention a pour objet un système de transmission sécurisée d'informations entre des stations raccordées par un réseau de transmission d'informations embarqué à bord d'un véhicule automobile, dans lequel les stations sont adaptées pour échanger des informations à travers le réseau sous la forme de trames de communication et au moins l'une des stations est une station maître adaptée pour émettre des trames d'informations de commande à destination d'au moins une station esclave, caractérisé en ce que la station maître comporte des moyens de génération d'informations d'acquittement associées aux informations de commande et des moyens d'intégration de ces informations d'acquittement dans une trame d'informations de commande, à destination de la station esclave et en ce que la station esclave comporte des moyens d'extraction dans la trame d'informations de commande reçue de ces informations d'acquittement et des moyens d'intégration de celles-ci dans une trame d'acquittement à destination de la station maître, pour lui indiquer la prise en compte des informations de commande, et en ce que les moyens de génération des informations d'acquittement sont formés par un générateur de code aléatoire.

Selon d'autres caractéristiques :
- la station maître comporte des moyens de comparaison des informations d'acquittement reçues de la station esclave aux informations d'acquittement émises à destination de celle-ci afin de valider ou non la prise en compte des informations de commande par la station esclave ;
- les moyens de comparaison sont adaptés pour comparer les informations d'acquittement reçues de la station esclave dans une période de temps prédéterminée après leur émission par la station maître ;
- la station maître est adaptée pour enclencher un mode de fonctionnement dégradé du système en cas de non-validation de la prise en compte des informations de commande par la station esclave ;
- la station esclave comporte des moyens de comparaison des informations d'acquittement reçues dans la trame en cours à celles de la trame précédente, pour déterminer une mise à jour des informations de commande par la station maître.

L'invention sera mieux comprise à la lecture de la description qui va suivre, donnée uniquement à titre d'exemple et faite en se référant aux dessins annexés, sur lesquels :
- la Fig.1 illustre un schéma synoptique d'un exemple d'application d'un système de transmission selon l'invention ;
- la Fig. 2 présente un chronogramme d'échange de trames entre une station maître et une station esclave ; et
- la Fig. 3 représente un schéma synoptique illustrant la structure et le fonctionnement d'un système de transmission selon l'invention.

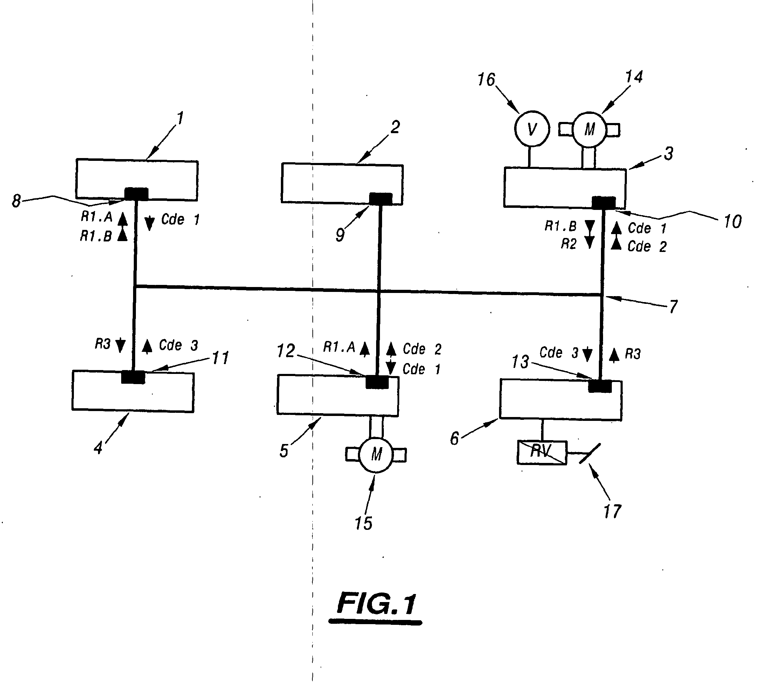

On a en effet représenté sur la figure 1, un système de transmission sécurisée d'informations entre des stations raccordées par un réseau de transmission d'informations embarqué à bord d'un véhicule automobile.

Ainsi, par exemple, six stations respectivement 1, 2, 3, 4, 5 et 6 sont représentées et raccordées par un réseau de transmission d'informations multiplexé désigné par la référence générale 7.

Ces stations sont adaptées pour échanger des informations à travers le réseau sous la forme de trames de communication et au moins l'une des stations est une station maître adaptée pour émettre des trames d'informations de commande à destination d'au moins une station esclave.

Les stations sont raccordées au réseau à travers des interfaces de raccordement correspondants, désignés par exemple par les références 8, 9, 10, 11, 12 et 13 respectivement pour les stations 1 à 6.

On notera également que chaque station dispose de moyens d'alimentation et de réveil de type classique, non représentés.

A titre d'exemple, la station 1 est une station maître qui envoie des commandes de vitesse de moteurs pilotés par les stations 3 et 5.

Ces moteurs sont par exemple désignés par les références 14 et 15 respectivement.

La station 5 est une station maître qui envoie une commande d'allumage ou d'extinction d'un voyant désigné par la référence générale 16 et piloté par la station 3.

La station 4 est une station maître qui envoie des commandes de position d'une électrovanne proportionnelle désignée par la référence générale 17 et pilotée par la station 6.

Ces différentes stations échangent donc des trames de communication à travers le réseau.

Pour résoudre les différents problèmes mentionnés précédemment concernant la sécurisation de la transmission et la prise en compte des informations, dans le système selon l'invention, la ou chaque station maître comporte des moyens de génération d'informations d'acquittement associées aux informations de commande et des moyens d'intégration de ces informations d'acquittement dans la trame d'informations de commande à destination de la station esclave.

De plus, la ou chaque station esclave correspondante comporte des moyens d'extraction dans la trame d'informations de commande reçue, de ces informations d'acquittement et des moyens d'intégration de celles-ci dans une trame d'acquittement à destination de la station maître, pour lui indiquer la prise en compte des informations de commande reçues.

Ceci sera décrit plus en détail par la suite.

Les trames de communication utilisées sont par exemple les suivantes :
- Cde1 : trame de communication émise par la station 1 et qui contient la commande de vitesse des moteurs électriques 14 et 15 et les informations d'acquittement C1 ;
- Cde2 : trame de communication émise par la station 5 et qui contient la commande d'allumage du voyant 16 et les informations d'acquittement C2 ;
- Cde3 : trame de communication émise par la station 4 et qui contient la commande en position de l'électrovanne 17 et les informations d'acquittement C3;
- R1.A : trame de communication qui contient les informations d'acquittement C1 ré-émises par la station 5 après réception et prise en compte de la trame Cde1 ;
- R1.B: trame de communication qui contient les informations d'acquittement C1 ré-émises par la station 3 après réception et prise en compte de la trame Cde1 ;
- R2 : trame de communication qui contient les informations d'acquittement C2 ré-émises par la station 3 après réception et prise en compte de la trame Cde2 ; et
- R3: trame de communication qui contient les informations d'acquittement C3 ré-émises par la station 6 après réception et prise en compte de la trame Cde3.

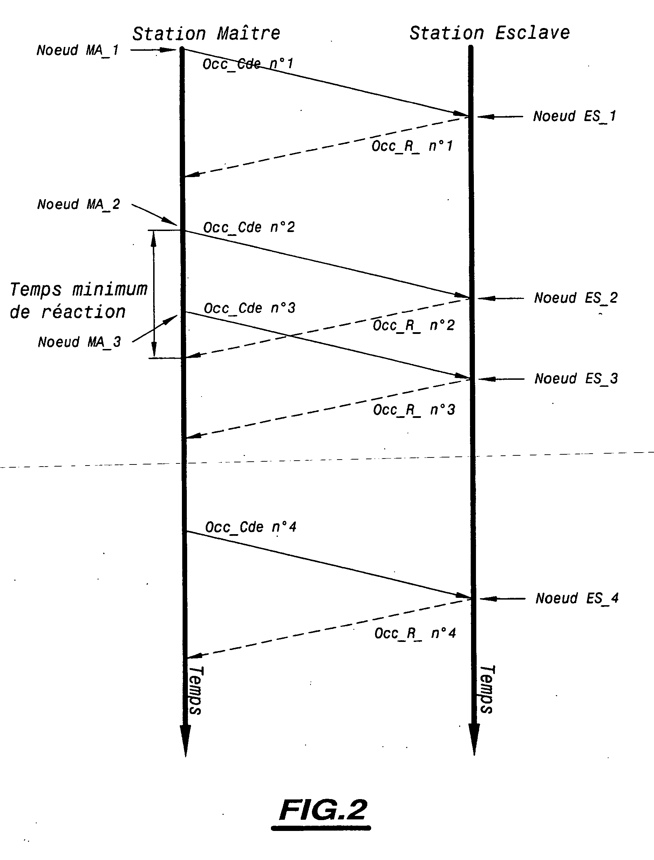

Ces échanges sont illustrés sur la figure 2, dans laquelle « occ_Cde, n° x » représente une instance de trame de communication émise par la station maître et qui contient la commande par exemple de vitesse, de position, etc..., et les informations d'acquittement, et « Occ_R_n°x » représente une instance de trame de communication émise par la station esclave et qui contient les informations d'acquittement formées en fait par une ré-émission des informations d'acquittement reçues associées à la commande « x ».

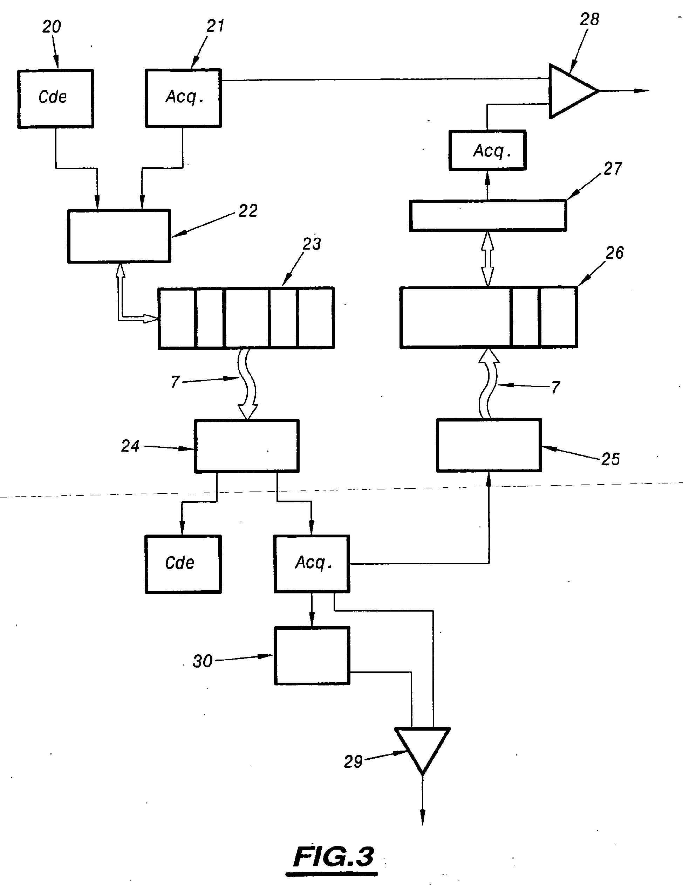

Le fonctionnement d'un tel système est illustré sur la figure 3.

La station maître comporte des moyens d'élaboration d'informations de commande Cde, formés par exemple par un logiciel applicatif implémenté dans cette station maître et désignés par la référence générale 20 sur cette figure 3.

Cette station est également équipée de moyens de génération d'informations d'acquittement Acq., associées à cette information de commande, ces moyens de génération étant également formés par exemple par des moyens logiciels implantés dans cette station et désignés par la référence générale 21.

En fait, ces moyens de génération 21 peuvent être formés par un générateur de code aléatoire ou un compteur à incrémentation dont la taille est déterminée pour minimiser les risques d'erreurs de façon classique.

Ces informations de commande Cde et d'acquittement Acq. sont alors délivrées à des moyens 22 d'intégration de celles-ci dans une trame d'informations de commande désignée par la référence générale 23, destinée à être émise à travers le réseau par exemple 7, à destination d'une station esclave.

La station esclave comporte alors de son côté des moyens 24 d'extraction dans la trame d'informations de commande 23 reçues, des informations de commande Cde et des informations d'acquittement Acq..

Ces informations d'acquittement extraites Acq. sont alors délivrées à des moyens 25 d'intégration de celles-ci dans une trame d'acquittement 26 destinée à être émise à travers le réseau 7 à destination de la station maître pour lui indiquer la prise en compte des informations de commande.

La station maître comporte alors des moyens 27 de récupération dans la trame 26 des informations d'acquittement Acq..

Ces informations d'acquittement extraites dans la trame d'acquittement 26, sont alors comparées aux informations d'acquittement émises par la station maître, dans des moyens de comparaison désignés par la référence générale 28, pour déterminer si celles-ci correspondent et donc que les informations de commande ont bien été prises en compte par la station esclave.

On notera qu'une limite de temps peut être fixée pour la réception de la trame d'acquittement et que celle-ci doit par exemple être reçue dans une période de temps prédéterminée après l'émission de la trame d'informations de commande par la station maître.

Par ailleurs, dans la station esclave, il peut également être prévu des moyens 29 de comparaison de ces informations d'acquittement extraites Acq. de la trame d'informations de commande 23 à des informations d'acquittement extraites d'une trame précédente et stockées par exemple dans des moyens de stockage de données 30, de cette station.

Ainsi, la station esclave compare les informations d'acquittement reçues à celles contenues dans la trame précédente pour déterminer si ces informations ont évolué ou non.

Si ces informations ont évolué, cela signifie que le processus d'élaboration des informations de commande a été mis à jour par la station maître. La station esclave peut alors considérer que la commande émise a été rafraîchie par la station maître et que celle-ci peut alors être appliquée. Sinon, la station esclave considère que les informations de commande n'ont pas été rafraîchies et elle peut engager un mode de fonctionnement dégradé.

Au niveau de la station maître, lorsque celle-ci a reçu la trame d'acquittement, elle peut considérer que la station esclave a bien pris en compte sa demande.

Par contre, si elle ne reçoit pas d'informations d'acquittement ou si les informations d'acquittement reçues sont figées, ne correspondent pas à l'information émise ou n'arrivent pas dans la période de temps prédéterminée, la station maître considère qu'il y a une anomalie de fonctionnement et peut alors éventuellement engager un mode de fonctionnement dégradé du système.

La période de temps prédéterminée correspond au temps minimum de réaction pendant lequel la station maître doit attendre l'acquittement de sa dernière commande envoyée, pour assurer la prise en compte ou non de celle-ci par la station esclave.

Ce temps peut en fait être la somme des différents éléments suivants :
- temps de transmission de la trame de commande de la station maître vers la station esclave ;
- temps de traitement dans la station esclave ;
- temps de transmission de la trame en retour d'état de la station esclave vers la station maître ; et
- temps de traitement dans la station maître.

Il peut ou non également être décidé que la station maître attende un acquittement avant d'émettre une nouvelle information de commande.

De même, la transmission et les échanges de trames de communication peuvent être fixés de façon régulière ou périodique.

On notera également que plus l'application est jugée sécuritaire par les concepteurs du système, plus les informations d'acquittement devront faire l'objet d'un calcul élaboré, afin d'éviter au maximum les risques d'erreurs et de doublons successifs.

Dans l'absolu, ces informations d'acquittement peuvent être codées sur deux bits, mais ceci est déconseillé.

Une information codée sur huit bits semble être une solution préférentielle, pour une application automobile, car elle représente 256 possibilités.

Bien entendu, d'autres modes de réalisation encore peuvent être envisagés.

## Revendications

1. Système de transmission sécurisée d'informations entre des stations raccordées par un réseau de transmission d'informations embarqué à bord d'un véhicule automobile, dans lequel les stations (1,2,3,4,5,6) sont adaptées pour échanger des informations à travers le réseau (7) sous la forme de trames de communication et au moins l'une des stations est une station maître adaptée pour émettre des trames d'informations de commande à destination d'au moins une station esclave, **caractérisé en ce que** la station maître comporte des moyens (21) de génération d'informations d'acquittement (Acq) associées aux informations de commande et des moyens (22) d'intégration de ces informations d'acquittement dans une trame (23) d'informations de commande, à destination de la station esclave et **en ce que** la station esclave comporte des moyens (24) d'extraction dans la trame d'informations de commande reçue de ces informations d'acquittement (Acq) et des moyens (25) d'intégration de celles-ci dans une trame d'acquittement (26) à destination de la station maître, pour lui indiquer la prise en compte des informations de commande, et **en ce que** les moyens de génération des informations d'acquittement (21) sont formés par un générateur de code aléatoire.

2. Système selon la revendication 1, **caractérisé en ce que** la station maître comporte des moyens (28) de comparaison des informations d'acquittement (Acq) reçues de la station esclave aux informations d'acquittement (Acq) émises à destination de celle-ci afin de valider ou non la prise en compte des informations de commande par la station esclave.

3. Système selon la revendication 2, **caractérisé en ce que** les moyens de comparaison (28) sont adaptés pour comparer les informations d'acquittement reçues de la station esclave dans une période de temps prédéterminée après leur émission par la station maître.

4. Système selon la revendication 2 ou 3, **caractérisé en ce que** la station maître est adaptée pour enclencher un mode de fonctionnement dégradé du système en cas de non validation de la prise en compte des informations de commande par la station esclave.

5. Système selon l'une quelconque des revendications précédentes, **caractérisé en ce que** la station esclave comporte des moyens (29) de comparaison des informations d'acquittement (Acq) reçues dans la trame en cours à celles (30) de la trame précédente, pour déterminer une mise à jour des informations de commande par la station maître.

6. Système selon la revendication 5, **caractérisé en ce que**, si les informations n'ont pas été mises à jour, la station esclave est adaptée pour engager un mode de fonctionnement dégradé.

## Claims

1. System for the secured transmission of information between stations which are connected by an information transmission network which is fitted on-board a motor vehicle, in which the stations (1, 2, 3, 4, 5, 6) are suitable for exchanging information via the network (7) in the form of communication fields and at least one of the stations is a master station which is suitable for transmitting command information fields which are directed towards at least one slave station, **characterised in that** the master station comprises means (21) for generating acknowledgement information (Acq) which are associated with the command information and means (22) for integrating that acknowledgement information in a command information field (23) which is directed towards the slave station, and **in that** the slave station comprises means (24) for extracting, from the command information field received, that acknowledgement information (Acq) and the means (25) for integrating it in an acknowledgement field (26) which is directed towards the master station, in order to indicate to it that the command information has been taken into consideration, and **in that** the means (21) for generating the acknowledgement information are formed by a random code generator.

2. System according to claim 1, **characterised in that** the master station comprises means (28) for comparing the acknowledgement information (Acq) which is received from the slave station with the transmitted acknowledgement information (Acq) which is directed towards that slave station in order to validate, or not to validate, whether the command information have been taken into consideration by the slave station.

3. System according to claim 2, **characterised in that** the comparison means (28) are suitable for comparing the acknowledgement information received from the slave station within a predetermined period of time after they are transmitted by the master station.

4. System according to claim 2 or 3, **characterised in that** the master station is suitable for initiating a degraded operating mode of the system in the event of non-validation of the command information being taken into consideration by the slave station.

5. System according to any one of the preceding claims, **characterised in that** the slave station comprises means (29) for comparing the acknowledgement information (Acq) received in the current field with the information (30) from the preceding field in order to determine updating of the command information by the master station.

6. System according to claim 5, **characterised in that**, if the information has not been updated, the slave station is suitable for engaging a degraded operating mode.

## Patentansprüche

1. System für die gesicherte Übertragung von Informationen zwischen Stationen, die durch ein Informationsübertragungsnetz an Bord eines Kraftfahrzeugs miteinander verbunden sind, wobei die Stationen (1, 2, 3, 4, 5, 6) eingerichtet sind zum Austauschen der Informationen über das Netz (7) in Form von Kommunikations-Rahmen, und wobei mindestens eine der Stationen eine Master-Station ist, die eingerichtet ist zum Aussenden der Befehls-Informations-Rahmen an mindestens eine Slave-Station, **dadurch gekennzeichnet, dass** die Master-Station aufweist: Mittel (21) zum Erzeugen von Ausführungs-Informationen (Acq), die mit den Befehlsinformationen verknüpft sind, und Mittel (22) zum Einspeisen dieser Ausführungs-Informationen in einem Befehls-Informations-Rahmen (23) an die Slave-Station, sowie **dadurch**, dass die Slave-Station aufweist: Mittel (24) zum Extrahieren der Ausführungs-Informationen (Acq) in dem empfangenen Befehls-Informations-Rahmen, sowie Mittel (25) zum Einspeisen dieser in einem Ausführungs-Rahmen (26) an die Masterstation, um diesem die Berücksichtigung der Befehlsinformationen anzuzeigen, und **dadurch**, dass die Mittel zur Erzeugung der Ausführungsinformationen (21) durch einen Zufalls-CodeGenerator gebildet sind.

2. System gemäß Anspruch 1, **dadurch gekennzeichnet, dass** die Master-Station Mittel (28) zum Vergleichen der von der Slave-Station empfangenen Ausführungsinformationen (Acq) mit den an diese gesendeten Ausführungsinformationen (Acq), zur Validierung oder Nicht-Validierung der Berücksichtigung der Befehlsinformationen durch die Slave-Station aufweist.

3. System gemäß Anspruch 2, **dadurch gekennzeichnet, dass** die Vergleichsmittel (28) eingerichtet sind zum Vergleichen der von der Slave-Station empfangenen Ausführungs-Informationen in einem vorbestimmten Zeitraum nach ihrem Aussenden durch die Masterstation.

4. System gemäß Anspruch 2 oder 3, **dadurch gekennzeichnet, dass** die Masterstation eingerichtet ist zum Einschalten eines herabgesetzten Betriebsmodus des Systems im Fall einer Nicht-Validierung der Berücksichtigung der Befehlsinformationen durch die Slave-Station.

5. System gemäß einem der vorhergehenden Ansprüche, **dadurch gekennzeichnet, dass** die Slave-Station Mittel (29) zum Vergleichen der in dem aktuellen Rahmen empfangenen Ausführungs-Informationen (Acq) mit denjenigen (30) des vorhergehenden Rahmens zum Bestimmen einer Aktualisierung der Befehlsinformationen durch die Masterstation aufweist.

6. System gemäß Anspruch 5, **dadurch gekennzeichnet, dass** wenn die Informationen nicht aktualisiert wurden, die Slave-Station zum Einschalten eines herabgesetzten Betriebsmodus eingerichtet ist.
